# EUROPEAN PATENT SPECIFICATION

(11) **EP 3 101 815 B1**
(45) Date of publication and mention of the grant of the patent: **31.01.2018**
(21) Application number: 15170655.3
(22) Date of filing: 04.06.2015
(51) Int. Cl.: H04B 5/00, G06F 3/0482, H02J 7/02, H04L 29/06, H04W 8/00, H04W 12/06, H04W 12/08, H02J 7/00, G06F 3/0488, H04W 8/20

(54) **SIGNALLING BETWEEN A FREQUENCY CONVERTER AND A TERMINAL DEVICE**
SIGNALISIERUNG ZWISCHEN EINEM UMRICHTER UND EINER ENDGERÄTEVORRICHTUNG
SIGNALISATION ENTRE UN CONVERTISSEUR DE FRÉQUENCE ET UN DISPOSITIF TERMINAL

(43) Date of publication of application: 07.12.2016
(73) Proprietor: ABB Technology Oy, 00380 Helsinki (FI)
(72) Inventor: Schroderus, Petri, 02780 Espoo (FI); Tamminen, Mikko, 33900 Tampere (FI)
(74) Representative: Kolster Oy Ab

(56) References cited:
- WO-A1-2014/007415
- CN-U- 202 406 085
- US-A1- 2013 342 025
- "System Description Wireless Power Transfer Volume I: Low Power", , 1 June 2013 (2013-06-01), pages 1-186, XP055093859, Retrieved from the Internet: URL:http://www.wirelesspowerconsortium.com /downloads/wireless-power-specification-pa rt-1.html [retrieved on 2013-12-17]

## Description

### TECHNICAL FIELD

The invention relates to communications between a frequency converter and a network apparatus.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

Frequency converters are used to change frequency and magnitude of electricity supplied to a load. Frequency converters are being used for example in alternating current (AC) motor drives. In exemplary operation, a frequency converter receives AC current from an electrical power supply and converts the frequency of the received AC current to another frequency after which the AC current is supplied to an AC electric motor. Also further parameters, for example, a voltage level of the received AC current may be changed. The AC motors are used in various applications including, for example, fans and pumps. In many applications the use of frequency converters may provide significant energy savings compared to supplying electrical power having a constant frequency.

Frequency converters, or motors, fans or pumps controlled by the frequency converters, are sometimes located in a dusty or wet environment. To protect the frequency converter from dust, water and high/low temperatures, the frequency converter may be enclosed within an enclosure so that sensitive electronics parts of the frequency converter are covered and protected from the dust and water. To facilitate operation, service and maintenance of the frequency converter, frequency converter settings may be managed by a user by means of a frequency converter control panel. When the frequency converter is enclosed within the enclosure, the control panel may include a touchscreen on the enclosure. However, when the touchscreen of the frequency converter is dirty or wet, the frequency converter may not be able to detect the user touching the touchscreen. Further, the enclosure may not be fully sealed from dust and water.

### BRIEF DESCRIPTION

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

Some embodiments provide a method, frequency converter, terminal device, drive system and a computer program product for providing a user interface of the frequency converter, such that the frequency converter is controllable by a user by means of interactive elements displayed on the user interface, wherein the terminal device is to be identified in the frequency converter before the displaying.

CN202406085 discloses an automation device comprising a frequency converter which can be controlled by a terminal device over a wireless network. US 2013/342025 A1 discloses an arrangement in which a power enabled device such as a mobile phone can be placed on a desktop and may receive power from a power transmitter unit. Detection, identification and authentication of the energy receiving device may be used. A frequency and control sub-unit may include a user interface for activating/deactivating the transmit power converter unit and to manually modify parameters.

WO 2014/007 415 A1 is related to charging an electronic device such as a mobile phone.

### BRIEF DESCRIPTION OF DRAWINGS

In the following the invention will be described in greater detail by means of preferred embodiments with reference to the attached drawings, in which
Figure 1 illustrates a wireless communication system to which embodiments of the invention may be applied;
Figure 2 illustrates an arrangement in connection with a frequency converter and a terminal device according to an embodiment of the invention;
Figure 3 is a signalling diagram of a procedure for signalling between a frequency converter and a terminal device according to an embodiment of the invention;
Figures 4 and 5 illustrate processes for signalling between a frequency converter and a terminal device according to some embodiments of the invention;
Figure 6 illustrates a blocks diagram of an apparatus according to an embodiment of the invention.

### DETAILED DESCRIPTION OF THE INVENTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

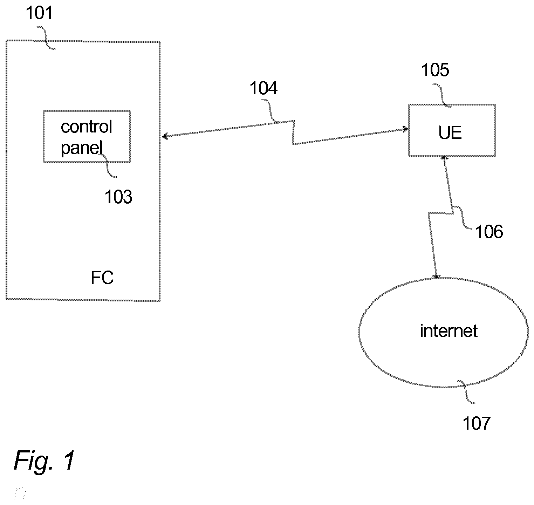

Figure 1 illustrates a wireless communication scenario to which embodiments of the invention may be applied. Referring to Figure 1, an example of a radio system to which embodiments of the invention may be applied, is based on LTE network elements. However, an embodiment is not limited to the LTE radio communications systems but may also be implemented in other radio communications systems, such as 3G, 4G, 5G, LTE-A, UMTS (universal mobile telecommunications system), EDGE, WCDMA, Bluetooth network, WLAN or any other mobile or wireless network. In an embodiment, the presented solution may be applied between user equipment belonging to different but compatible systems such as LTE and UMTS.

A general architecture of a communication system is illustrated in Figure 1. Figure 1 illustrates a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements, and protocols used in or for wireless communication are irrelevant to the actual invention. Therefore, they need not be discussed in more detail here.

Figure 1 illustrates a communication system according to an embodiment. Figure 1 illustrates an exemplary communications system in which a terminal device 105 is able to connect to the internet 107 and to one or more frequency converters 101. The terminal device 105 may be located on-site at a close proximity of the frequency converter 101. The terminal device 105 may comprise a user equipment such as a smartphone, mobile phone, tablet computer or laptop computer. A connection 106 of the terminal device 105 to the internet 107 may be provided by a cellular, wireless and/or wired link 106. A connection 104 of the terminal device 105 to the frequency converter 101 may be provided e.g. by a Bluetooth, NFC, WiFi and/or inductive connection (such as an inductive connection according to an inductive power standard (Qi) by the Wireless Power Consortium).

The terminal device 105 may be connected to a remote service center (not shown in Figure 1) via the internet 107, for facilitating operation, service and/or maintenance of the frequency converter 101. The terminal device 105 may facilitate different ways of how to communicate with the frequency converter 101. A suitable technology may be used to store frequency converter parameters into a service center database. For example, a cloud service (cloud computing) may be used via the internet 107 to exchange frequency converter parameters into the service center database.

The frequency converter 101 comprises a control panel 103 capable of displaying a user interface of the frequency converter 101. A connection (not shown in Figure 1) between the frequency converter 101 and the control panel 103 may be provided by electrical conductors, for example, wires, cables and/or buses (such as RS-485). The control panel 103 may be a fixed part of the frequency converter 101 or a detachable control panel which may be connected to one or more frequency converters. The control panel 103 is used to control the functions of the frequency converter 101, for example, to start the frequency converter 101 or to turn off the frequency converter 101. The control panel 103 may also be used to set parameters which the frequency converter 101 may store in a memory. The user may be offered, via a display and a user interface (a touchscreen and/or keyboard) on the control panel 103, a possibility to control the frequency converter 101, and/or to select specific parameters that the user wants to store in the memory. The selection made by the user is stored in the memory and taken into account when the frequency converter during operation or maintenance stores parameters into the memory.

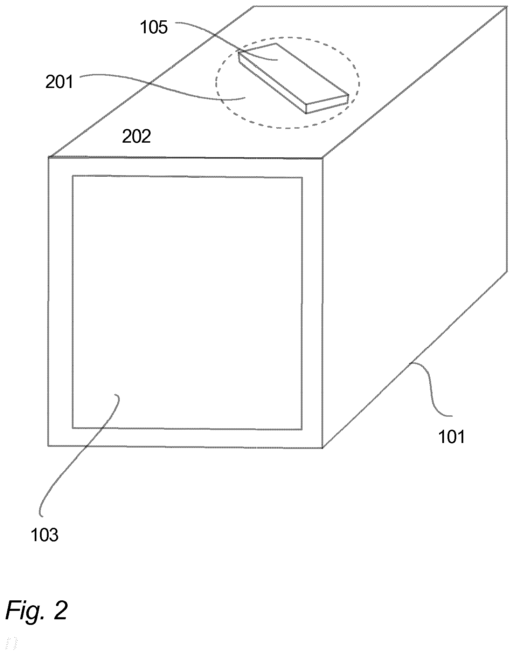

Figure 2 illustrates an arrangement in connection with a frequency converter 101 and a terminal device 105 according to an embodiment. Referring to Figure 2, the frequency converter 101 comprises an enclosure 202, and an inductive charging position 201 for the terminal device 105. The inductive charging position 201 may be located on the enclosure 202. The frequency converter 101 comprises energy transfer means capable of wireless inductive power transfer to the terminal device 105 placed to the charging position 201. The frequency converter further comprises a control panel 103. The control panel 103 may comprise a display 103 such as a large touchscreen 103, to display information to the user and to provide a user interface for receiving a user input.

The inductive power transfer may be based on electromagnetic induction between the energy transfer means and the display. The electromagnetic induction causes an electric current in the display such that the display is powered by the induced current from the energy transfer means. Since the display is powered wirelessly from the frequency converter, the enclosure may be manufactured and designed without openings for power cables of the display. Since there are no openings for the power cables of the display, the enclosure meets many different IP ratings without needing to redesign the enclosure. In this way also the same enclosure may be manufactured and used in frequency converters to meet different IP ratings.

The energy transfer means capable of inductive power transfer to a display installed to the installation position may follow a principle of an inductively coupled power transfer including a transmitter transfer head, e.g. transmitter coil L1, in the energy transfer means and a receiver transfer head, e.g. a receiver coil L2, in the display. Both transfer heads form a system of magnetically coupled inductors. An alternating current in the transmitter transfer head generates a magnetic field which induces a voltage in the receiver transfer head. This voltage can be used to feed electrical power to the display.

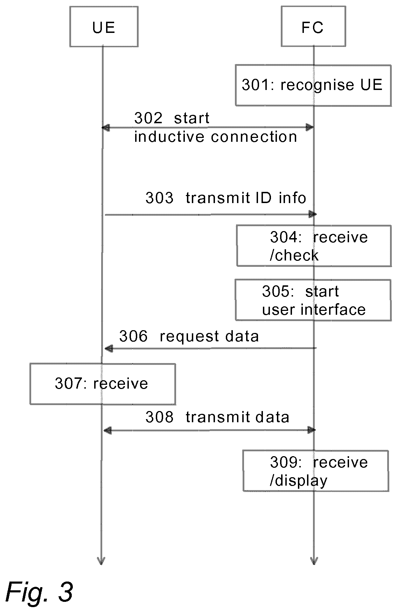

Let us now describe an embodiment of the invention with reference to Figure 3. Figure 3 is a signalling diagram illustrating a method for signalling between a terminal device 105 and a frequency converter 101. Referring to Figure 3, the frequency converter 101 is configured to detect 301 if the terminal device 105 is placed to an inductive charging position 201 of the frequency converter 101. In response to the detecting 301, an inductive connection is set up 302 between the frequency converter 101 and the terminal device 105. In response to the set-up of the inductive connection, an identification procedure is carried out between the frequency converter 101 and the terminal device 105 via a wireless connection established between the frequency converter and the terminal device. During the identification procedure it is determined, in the frequency converter 101, whether or not the terminal device 105 is an authorized terminal device. The identification procedure may, for example, comprise the terminal device 105 transmitting 304 identification information on the terminal device 105 to the frequency converter 101, in response to the setup of the induction connection 302. The identification information on the terminal device 105 may be transmitted 303 to the frequency converter 101 automatically in response to the set-up of the inductive connection 302.

The message 303 is transmitted via a wireless connection which may be the inductive connection 302, or the wireless connection may be a separate connection established between the terminal device 105 and the frequency converter 101, such as a Bluetooth, WiFi or NFC connection, during the identification procedure. In item 304, the identification information on the terminal device 105 is received and checked in the frequency converter 101, wherein if it is determined, in the frequency converter 101, that the terminal device 105 is an authorized terminal device 105, the method comprises carrying out data transfer between the frequency converter 101 and the terminal device 105 via the wireless connection (i.e. the inductive connection, or the separate NFC, WiFi or Bluetooth connection). The data transfer may, for example, comprise the frequency converter 101 requesting 306 the terminal device 105 to start the data transfer, the terminal device 105 receiving 307 the request 306, and the terminal device 105 transmitting 308 data to the frequency converter 101. Data or identification information may also be transmitted from the frequency converter 101 to the terminal device 105.

The display (control panel, touchscreen) 103 of the frequency converter 101 may at first be in a standby mode (switched off). The display 103 may be started before the identification procedure. For example, a motion detector (such as an infrared detector, microwave detector, ultrasonic detector, tomographic motion detector, video camera software) may be used in the frequency converter to start the display 103 when detecting a user approaching the frequency converter. However, the interactive elements of the user interface may be hidden or inaccessible until the terminal device 105 is granted access to the local controls of the frequency converter 101. A successful identification procedure may cause the interactive elements of the user interface of the frequency converter 101 to be switched on 305 to an active mode. Such interactive elements may include, for example, images, icons, graphics, texts, curves, parameters, data or press keys for different functions or operations to be performed. The user of an authorized terminal device 105 is able to use the (large) touch display of the frequency converter 101 for controlling the frequency converter. For example, the user may press an element displayed on the touch display of the frequency converter 101, causing the frequency converter 101 to perform a corresponding function in the frequency converter. The function may include e.g. starting or turning off the frequency converter, or setting frequency converter parameters. The frequency converter 101 is configured to display 309, on the display 103 of the frequency converter 101, at least part of the data transferred between the frequency converter 101 and the terminal device 105 via the wireless connection. For example, based on the data transmitted 308 between the frequency converter 101 and the terminal device 105, a user interface of the terminal device 105 may be received and displayed 309 on the large touchscreen of the frequency converter 101. Thus the user of the authorized terminal device 105 may also use the (large) touch display of the frequency converter 101 for controlling the terminal device 105 (instead of/in addition to the (smaller) display/keyboard of the terminal device 105). For example, the user may press an element displayed on the touch display of the frequency converter 101, causing the frequency converter 101 to transmit a corresponding command to the terminal device 105. This may include e.g. requesting 308 the terminal device 105 to retrieve data related to the frequency converter 101 e.g. from the internet 107, service centre, service centre database and/or the memory of the terminal device 105, which retrieved data may then be received in the frequency converter 101 from the terminal device 105 and displayed 309 by the frequency converter display 103.

If the terminal device is not registered to the frequency converter service application/to the particular frequency converter (group) (e.g. it is the first time that the terminal device is to use the frequency converter application), the terminal device 105 may be configured to perform a user registration procedure (not shown in Figure 3) by prompting the user of the terminal device 105 to enter a password and/or a user identification code. The user registration procedure may be carried out before the setup of the inductive connection. The user registration procedure need not be carried out on-site near the frequency converter, instead the user registration procedure may be carried out in advance, for example, for a specific user, terminal device, frequency converter, frequency converter group, site and/or application.

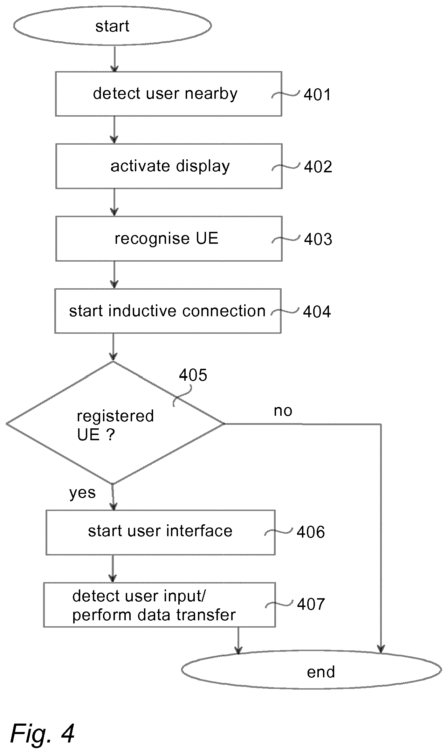

Figure 4 is a flow chart illustrating the functioning of a frequency converter 101 according to an embodiment. Referring to Figure 4, the frequency converter may include an infrared detector configured to detect 401 a user nearby/approaching the frequency converter. The frequency converter may be configured to start 402 the display 103 when detecting the user approaching the frequency converter. The interactive elements of the user interface of the frequency converter may still be hidden or inaccessible. The frequency converter 101 is configured to detect 403 if a terminal device 105 is placed to an inductive charging position 201 of the frequency converter 101. In response to the detecting 403, the frequency converter 101 is configured to set up 404 an inductive connection between the frequency converter 101 and the terminal device 105.

An identification procedure is carried out between the frequency converter 101 and the terminal device 105 via a wireless connection established between the frequency converter 101 and the terminal device 105. The identification procedure involves determining, in the frequency converter 101, whether or not the terminal device 105 is an authorized terminal device. Identification information on the terminal device 105 may be received in the frequency converter 101 from the terminal device automatically, in step 405, in response to the set-up 404 of the inductive connection (via a wireless connection which may be the inductive connection established in step 404, or the wireless connection may be a separate connection established between the frequency converter 101 and the terminal device 105 during the identification procedure, such as a Bluetooth, WiFi or NFC connection). The identification information on the terminal device 105 is checked 405 in the frequency converter 101. If it is determined, in step 405, that the terminal device 105 is a registered/authorized terminal device, the method comprises carrying out 407 data transfer between the frequency converter 101 and the terminal device 105 via the wireless connection (i.e. via the inductive connection, or via the NFC, WiFi or Bluetooth connection). The data transfer may comprise the frequency converter 101 requesting the terminal device 105 to start the data transfer, and the frequency converter 101 receiving 407 data transmitted from the terminal device 105. Data may also be transmitted 407 from the frequency converter 101 to the terminal device 105.

A successful user identification procedure cause the interactive elements of the user interface 103 of the frequency converter 101 to be switched on 406 to an active mode. Thus the user of an authorized terminal device 105 is able to use the (large) touch display of the frequency converter 101 for controlling the frequency converter. For example, the user may press an element displayed on the touch display of the frequency converter 101, causing the frequency converter 101 to detect the user's input and perform a corresponding function in the frequency converter. The function may include e.g. starting or turning off the frequency converter, or setting frequency converter parameters. The frequency converter 101 is configured to display 410, on the display 103 of the frequency converter 101, at least part of the data transferred between the frequency converter 101 and the terminal device 105 via the wireless connection. For example, based on the data transmitted 410 between the frequency converter 101 and the terminal device 105, a user interface of the terminal device 105 may be received and displayed 407 on a large touchscreen 103 of the frequency converter 101. Thus the user of an authorized terminal device 105 is able to use the (large) display 103 of the frequency converter 101 for controlling the terminal device 105 (instead of/in addition to the (smaller) display/keyboard of the terminal device 105). For example, the user may press an element displayed on the touch display of the frequency converter 101, causing the frequency converter 101 to transmit corresponding command to the terminal device 105. This may include requesting 410 the terminal device 105 to retrieve data related to the frequency converter 101 e.g. from the internet 107, service centre, service centre database and/or the memory of the terminal device 105, which data may then be received in the frequency converter 101 from the terminal device 105 and displayed 410 by the frequency converter touchscreen 103.

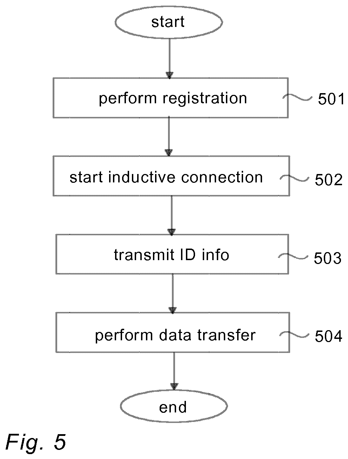

Figure 5 is a flow chart illustrating the functioning of a terminal device 105 according to an embodiment. Referring to Figure 5, the terminal device 105 is configured to set up 502 an inductive connection between the terminal device 105 and a frequency converter 101 when the terminal device 105 is placed to an inductive charging position 201 of the frequency converter 101. After that an identification procedure is carried out between the terminal device 105 and the frequency converter 101 via a wireless connection established between the terminal device 105 and the frequency converter 101, to determine whether or not the terminal device 105 is an authorized terminal device. The identification procedure may, for example, comprise transmitting 503, to the frequency converter 101, a message comprising identification information on the terminal device 105. The identification information on the terminal device 105 may be transmitted 503 to the frequency converter 101 automatically in response to the set-up of the inductive connection. The identification information is transmitted via a wireless connection which may be the inductive connection, or the wireless connection may be a separate connection established between the terminal device 105 and the frequency converter 101, such as a Bluetooth, WiFi or NFC connection, based on the identification procedure. If the terminal device 105 is an authorized/registered terminal device, the method may comprise carrying out 504 data transfer between the frequency converter 101 and the terminal device 105 via the wireless connection (i.e. the inductive connection, or the NFC, WiFi or Bluetooth connection). The data transfer may comprise the terminal device 105 receiving a data request from the frequency converter 101, requesting the terminal device 105 to start data transfer, and the terminal device 105 transmitting requested data to the frequency converter 101. Data may also be received in the terminal device 105 from the frequency converter 101. For example, based on the data transmitted from the terminal device 105 to the frequency converter 101, a user interface of the terminal device 105 may be received and displayed on a large touchscreen of the frequency converter 101. For example, the user may press an element displayed on the touch display 103 of the frequency converter 101, causing the frequency converter 101 to transmit a corresponding command to the terminal device 105. This may cause the terminal device 105 to receive a message requesting the terminal device 105 to retrieve data related to the frequency converter 101 e.g. from the internet 107, service centre, service centre database and/or the memory of the terminal device 105, which data may then be transmitted from the terminal device 105 to the frequency converter 101.

If the terminal device is not registered to the frequency converter service application/to the particular frequency converter (group) (e.g. it is the first time that the terminal device is to use the frequency converter application), the terminal device 105 may be configured to perform, in step 501, a user registration procedure e.g. by prompting the user of the terminal device 105 to enter a password and/or a user identification code. The user registration procedure may be carried out before the setup of the inductive connection. The user registration procedure need not be carried out on-site near the frequency converter, instead the user registration procedure may be carried out in advance, for example, for a specific user, terminal device, frequency converter, frequency converter group, site and/or application.

In an embodiment, the frequency converter 101 may be enclosed within a sealed enclosure 202 so that sensitive electronics parts of the frequency converter are fully covered and protected from dust and water. The frequency converter 101 includes a component 201 that is capable of supplying inductive charging for possible external user devices 105. The external user device 105 may be a mobile device 105 or a custom made user interface. The data transfer between the external user device 105 and the frequency converter 101 may be carried out via a wireless connection 104 and/or an inductive connection 104. The enclosure 202 may include a control panel 103 such as a touch display 103 which may be used to control the frequency converter and to interact with the frequency converter 101 and the external user device 105. The touchscreen may be located e.g. in the front wall of the enclosure.

In an embodiment, the frequency converter 101 is configured to identify the external user device 105 when the external user device 105 is placed onto the inductive charging area 201 of the frequency converter 101. The requirement that the external user device 105 is to be identified by the frequency converter 101 enables the available actions of external user device 105 with the frequency converter 101 to be limited per user and/or per user group (and/or per terminal device/terminal device group, and/or per frequency converter/frequency converter group). When placed on the inductive charging position 201 of the frequency converter 101, the successfully identified external user device 105 may be operated and controlled through the large touch display 103 of the frequency converter 101 by utilizing the communications connection 104 (inductive/wireless connection) between the frequency converter 101 and the external user device 105.

In an embodiment, the frequency converter 101 includes integrated within the enclosure 202 an area 201 which supplies inductive power to the external user device 105, and a large touch display 103. Additionally the frequency converter 101 may be capable of communicating wirelessly (e.g. via NFC, Bluetooth, WiFi) with the external user device 105.

In an embodiment, the display 103 of the frequency converter 101 is in a standby mode (sleep mode) when no external user device is connected to the frequency converter 101. When an external user device 105, e.g. a mobile device, is placed onto the inductive charging area 201 of the frequency converter 101, the frequency converter 101 is configured to identify the external user device 105 and allow an authorized external user device 105 access to various frequency converter actions.

In an embodiment, the mobile device 105 is controllable through the large touch display 103 of the frequency converter 101, via the connection 104.

An embodiment enables the use of a frequency converter 101 that has a fully closed enclosure 202 and that is able to communicate and supply power to the external user device 105. It is possible to obtain energy savings due to the standby mode of the frequency converter display 103 when no external user device is connected to the frequency converter 101. The touch interface integrated to the enclosure enables eliminating control panel connections that would have to be protected against water and dust.

An embodiment enables easy and fast checking of user rights due to the user identification just by placing the mobile device 105 on the frequency converter 101.

An embodiment enables the use of a single user interface displayed on the frequency converter touch display 103 to control the frequency converter 101 and to control the mobile device 105.

An embodiment enables information needed to solve possible problems with the frequency converter 101 to be easily collected by means of the mobile device 105 and its features such as internet access, email etc. The mobile device 105 and its features may be utilized to solve problems related to the operation, service and maintenance of the frequency converter 101.

In an embodiment, the terminal device 105 may be allowed access to a group of frequency converters with a single identification procedure. This means that if the terminal device 105 is successfully identified by one frequency converter in a group, each frequency converter in a predetermined group of frequency converters is configured to switch on its user interface, wherein these frequency converters may be controlled through their touchscreens by the user of the terminal device 105. A single user identification may give access to a group of frequency converters. For example, each frequency converter in the group may be controlled by using its own touch interface (all touch interfaces of the group are active), or each frequency converter in the group may be controlled by using the touch interface of the frequency converter that was used for the identification (only one touch interface is active).

The data transferred between the terminal device 105 and the frequency converter 101 may relate to uploading, sending and/or updating one or more of frequency converter parameters, frequency converter fault codes, frequency converter location information, frequency converter firmware information, image files, and user manual information such as pdf documents commissioning instructions or video files. Examples of frequency converter parameters include output current, motor speed, frequency, torque and temperature.

As used herein, the term parameter may refer to any measured, setup or adjusted item/value relating to the frequency converter. Examples of such parameters include output current, motor speed, frequency, torque and temperature. Parameters may also be referred to as settings.

The user of the first terminal device may be a registered user of one or more frequency converters. A user registration procedure may be provided, requiring the user of the terminal device to enter a specific authentication code on the terminal device before allowing the terminal device with access to the one or more frequency converters. An identification procedure may then be carried out automatically, e.g. in response to the setup of the inductive connection when the terminal device is placed by the user on the inductive charging position of one of the frequency converters. Access rights and/or authentication codes regarding the frequency converter(s) may be defined to be user-specific, terminal device specific, frequency converter specific, frequency converter group specific, site-specific etc.

A one-time registration application may be utilised in the terminal device, wherein a username and password is required only for identifying terminal devices and/or users that have not accessed the frequency converter before. Already registered terminal devices/users may be identified automatically without user's interaction, by using signalling (e.g. via the inductive/wireless connection) between the terminal device and the frequency converter. Thus, a one-time registration carried out with the terminal device is enough, and there is no need to enter a username and a password every time the terminal device is used for user identification.

If the frequency converter is not connected to a corporate network or the internet, the use of the terminal device enables locally to create such a connection when needed. This may be desirable, for example, if a continuous connection is not wanted for cost or security reasons.

A wireless charging function may be applied to ensure that the terminal device is able to, for example, provide the internet connection as long as needed.

Although the touch interface of the frequency converter is primarily used to control the frequency converter itself (starting, stopping, setting parameters etc.), the touch interface may also be used to control the mobile device and, for example, have the mobile device to retrieve service instructions.

Thus, in an embodiment, the user of the terminal device may manage and communicate information related to the frequency converter via the terminal device, by means of the touchscreen of the frequency converter. The terminal device may be, for example, a mobile phone such as a smart phone operating on-site. The user of the terminal device, e.g. a customer or maintenance personnel, is able to establish a connection with the frequency converter e.g. a Bluetooth and/or an inductive connection.

The user of the terminal device may be authenticated by the terminal device. For example, the terminal device may prompt the user to enter a predefined password and/or a user ID when a corresponding frequency converter support application is started on the terminal device. If the user fails to enter the correct password/user ID, the application is not started. This enables preventing an unauthorized access to the frequency converter settings.

In an embodiment, a frequency converter support application is implemented as a cloud service (cloud computing) via the internet. This may involve client-server computing implemented as a distributed network application including service providers (servers) and service requestors (clients).

In an embodiment, the user interface of the frequency converter support application displayed on the terminal device, is simultaneous displayed on a control panel display of the frequency converter.

In an embodiment, the users of the frequency converter may be identified by means of a wireless device, and the frequency converter may be controlled and managed by the user after a successful identification carried out wirelessly. The identification enables preventing unauthorized access to the controlling and management of the frequency converter.

An embodiment relates to a drive system comprising a frequency converter as described above.

In addition to a drive system/frequency converter, an embodiment may also be applicable to other automation devices such as AC/DC modules, DC/AC modules, programmable logic controllers, switches, motion controllers or motion drives, servo motors, soft starters, robotics, cars, heavy equipment, etc.

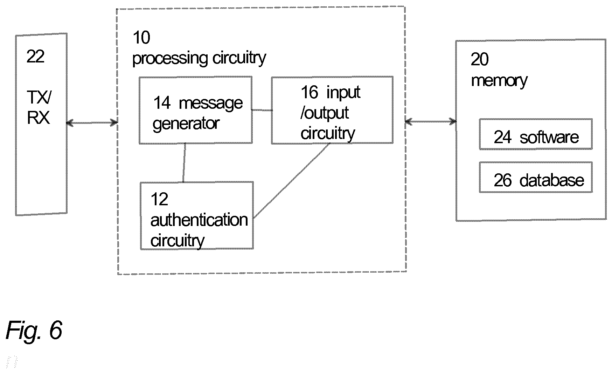

An embodiment provides an apparatus comprising at least one processor and at least one memory including a computer program code, wherein the at least one memory and the computer program code are configured, with the at least one processor, to cause the apparatus to carry out the procedures of the above-described terminal device or frequency converter. The at least one processor, the at least one memory, and the computer program code may thus be considered as an embodiment of means for executing the above-described procedures of the terminal device or frequency converter. Figure 6 illustrates a block diagram of a structure of such an apparatus. The apparatus may be comprised in the terminal device or frequency converter, e.g. the apparatus may form a chipset or a circuitry in the terminal device or frequency converter. In some embodiments, the apparatus is the terminal device or frequency converter. The apparatus comprises a processing circuitry 10 comprising the at least one processor. The processing circuitry 10 may comprise an authentication circuitry for performing the identification procedure between the terminal device and frequency converter. The processing circuitry 10 may further comprise a message generator for performing the data transfer between the terminal device and frequency converter. The processing circuitry 10 may also comprise an input/output circuitry for receiving a user input/for outputting information to the user.

The processing circuitry 10 may comprise the circuitries 12, 14, 16 as sub-circuitries, or they may be considered as computer program modules executed by the same physical processing circuitry. The memory 20 may store one or more computer program products 24 comprising program instructions that specify the operation of the circuitries 12, 14, 16. The memory 20 may further store a database 26 comprising definitions for frequency controller settings, for example. The apparatus may further comprise a radio interface 22 providing the apparatus with wireless communication capability with the network node. The radio interface may comprise a radio communication circuitry enabling wireless communications and comprise a radio frequency signal processing circuitry and a baseband signal processing circuitry. The baseband signal processing circuitry may be configured to carry out the functions of a transmitter and/or a receiver. In some embodiments, the radio interface may comprise a fixed communication circuitry enabling wired communications.

As used herein, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used herein, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described above in connection with Figures 1 to 6 may also be carried out in the form of one or more computer process defined by one or more computer programs. The computer program shall be considered to encompass also a module of a computer programs, e.g. the above-described processes may be carried out as a program module of a larger algorithm or a computer process. The computer program(s) may be in source code form, object code form, or in some intermediate form, and it may be stored in a carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to cellular or mobile communication systems defined above but also to other suitable communication systems. The protocols used, the specifications of cellular communication systems, their network elements, and terminal devices develop rapidly. Such development may require extra changes to the described embodiments. Therefore, all words and expressions should be interpreted broadly and they are intended to illustrate, not to restrict, the embodiment.

It will be obvious to a person skilled in the art that, as the technology advances, the inventive concept can be implemented in various ways. The invention and its embodiments are not limited to the examples described above but may vary within the scope of the claims.

## Claims

1. A method for establishing a connection between a terminal device of a wireless communications system and an automation device configured to receive electrical current from an electrical power supply, convert the frequency of the received electrical current to another frequency, and after that supply the electrical current to an electric motor,
the automation device comprising an inductive charging position for the terminal device, wherein the automation device comprises energy transfer means capable of wireless inductive power transfer to the terminal device placed to the charging position,
the method comprising
in response to recognising, in the automation device, that the terminal device is placed to the charging position,
carrying out an identification procedure between the automation device and the terminal device via a wireless connection established between the automation device and the terminal device, to determine, in the automation device, whether the terminal device is an authorized terminal device;
if based on the identification procedure it is determined, in the automation device, that the terminal device is an authorized terminal device, the method comprises
displaying, on a display of the automation device, a user interface of the automation device, such that the automation device is controllable by a user by means of interactive elements displayed on the user interface.

2. A method of claim 1, wherein the method further comprises
carrying out data transfer between the automation device and the terminal device via the wireless connection;
displaying, on the display of the automation device, at least part of data transferred between the automation device and the wireless terminal device via the wireless connection.

3. A method of claim 1 or 2, wherein the method comprises
displaying, on the display of the automation device, a user interface of the terminal device, based on the data transferred between the terminal device and the automation device via the wireless connection.

4. A method of claim 1, 2 or 3, wherein the display of the automation device comprises a touchscreen, and the method comprises
transmitting control data to control the automation device or the terminal device in response to a user touching a corresponding element on the user interface.

5. A method of any of claims 1 to 4, wherein the method comprises
switching the user interface of the automation device from a standby mode to an active mode if it is determined that the terminal device placed to the inductive charging position is an authorized terminal device.

6. A method of any of claims 1 to 5, wherein the identification procedure comprises the automation device receiving identification information on the terminal device from the terminal device.

7. A communications system comprising a terminal device of a wireless communications system and an automation device configured to receive electrical current from an electrical power supply, convert the frequency of the received electrical current to another frequency, and after that supply the electrical current to an electric motor,
wherein the automation device comprises an inductive charging position for the terminal device, wherein the automation device comprises energy transfer means capable of wireless inductive power transfer to the terminal device placed to the charging position, and wherein the terminal device is capable of receiving wireless inductive power transfer from the energy transfer means of the automation device when the terminal device is placed to an inductive charging position of the automation device,
wherein the system is configured to
in response to recognising, in the automation device, that the terminal device is placed to the charging position, carry out an identification procedure between the automation device and the terminal device via a wireless connection established between the automation device and the terminal device, to determine, in the automation device, whether the terminal device is an authorized terminal device;
wherein if based on the identification procedure it is determined, in the automation device, that the terminal device is an authorized terminal device, the system is configured to display, on a display of the automation device, a user interface of the automation device, such that the automation device is controllable by a user by means of interactive elements displayed on the user interface.

8. A system according to claim 7, wherein the system is configured to transmit, from the terminal device to the automation device, identification information on the terminal device via a wireless connection established between the automation device and the terminal device when the terminal device is placed to the charging position, to indicate to the automation device that the terminal device is an authorized terminal device.

9. A system according to claim 7 or 8, wherein the system is configured to carry out data transfer between the automation device and the terminal device via the wireless connection, if the terminal device is an authorized terminal device.

10. A system according to claim 9, wherein the system is configured to prompt, in the terminal device, the user to enter a password on the terminal device during a user registration procedure performed in the terminal device before the identification procedure.

11. A method of any of claims 1 to 6, wherein the wireless connection comprises at least one of a mobile network connection, wireless local area network connection, Bluetooth connection, WiFi connection, inductive connection, and near field communication connection.

12. A method of any of claims 1 to 6, wherein the authorization of the terminal device is defined to be at least one of terminal device specific, automation device specific, automation device group specific, user specific, user group specific, and action specific.

13. An automation device configured to receive electrical current from an electrical power supply, convert the frequency of the received electrical current to another frequency, and after that supply the electrical current to an electric motor, wherein the automation device comprises
at least one processor,
at least one memory including a computer program code, and
an inductive charging position for a terminal device of a wireless communications system, wherein the automation device comprises energy transfer means capable of wireless inductive power transfer to the terminal device placed to the charging position;
wherein, in response to recognising, in the automation device, that the terminal device is placed to the charging position, the at least one memory and the computer program code are configured, with the at least one processor, to cause the automation device to
carry out an identification procedure between the automation device and the terminal device via a wireless connection established between the automation device and the terminal device, to determine whether the terminal device is an authorized terminal device;
if based on the identification procedure it is determined, in the automation device, that the terminal device is an authorized terminal device, the automation device is configured to
display, on the display of the automation device, a user interface of the automation device, such that the automation device is controllable by a user by means of interactive elements displayed on the user interface.

14. An automation device of claim 13, wherein the at least one memory and the computer program code are configured, with the at least one processor, to cause the automation device to
perform any of the method steps of claims 1 to 6, 11 or 12.

15. An automation device of claim 13 or 14, wherein the automation device is enclosed in a sealed enclosure.

16. A automation device of claim 15, wherein the inductive charging position is located on the enclosure.

17. A drive system comprising an automation device of any of claims 13 to 16.

18. A computer program product embodied on a distribution medium readable by a computer and comprising program instructions which, when loaded into an apparatus, execute the method according to any preceding claim 1 to 6, 11 or 12.

19. A computer program product embodied on a non-transitory distribution medium readable by a computer and comprising program instructions which, when loaded into the computer, execute a computer process comprising any of the steps of claims 1 to 6, 11 or 12.

## Patentansprüche

1. Verfahren zum Aufbauen einer Verbindung zwischen einer Endgerätevorrichtung eines Drahtloskommunikationssystems und einer Automatisierungsvorrichtung, die dazu ausgebildet ist, elektrischen Strom aus einer elektrischen Leistungsversorgung zu empfangen, die Frequenz des empfangenen elektrischen Stroms auf eine andere Frequenz umzurichten, und danach den elektrischen Strom an einen Elektromotor zu liefern,
wobei die Automatisierungsvorrichtung eine induktive Ladestelle für die Endgerätevorrichtung umfasst, wobei die Automatisierungsvorrichtung Energieübertragungsmittel umfasst, die zur drahtlosen induktiven Leistungsübertragung an die an der Ladestelle platzierte Endgerätevorrichtung fähig sind,
wobei das Verfahren umfasst
in Antwort auf Erkennen, in der Automatisierungsvorrichtung, dass die Endgerätevorrichtung an der Ladestelle platziert ist,
Durchführen eines Identifizierungsvorgangs zwischen der Automatisierungsvorrichtung und der Endgerätevorrichtung über eine Drahtlosverbindung, die zwischen der Automatisierungsvorrichtung und der Endgerätevorrichtung aufgebaut ist, um in der Automatisierungsvorrichtung zu bestimmen, ob die Endgerätevorrichtung eine autorisierte Endgerätevorrichtung ist;
wenn basierend auf dem Identifizierungsvorgang in der Automatisierungsvorrichtung bestimmt wird, dass die Endgerätevorrichtung eine autorisierte Endgerätevorrichtung ist, das Verfahren umfasst
Anzeigen einer Benutzerschnittstelle der Automatisierungsvorrichtung auf einer Anzeige der Automatisierungsvorrichtung derart, dass die Automatisierungsvorrichtung durch einen Benutzer mittels interaktiven Elementen, die auf der Benutzerschnittstelle angezeigt werden, steuerbar ist.

2. Verfahren nach Anspruch 1, wobei das Verfahren weiter umfasst
Durchführen von Datenübertragung zwischen der Automatisierungsvorrichtung und der Endgerätevorrichtung über die Drahtlosverbindung;
Anzeigen von mindestens einem Teil der über die Drahtlosverbindung zwischen der Automatisierungsvorrichtung und der drahtlosen Endgerätevorrichtung übertragenen Daten auf der Anzeige der Automatisierungsvorrichtung.

3. Verfahren nach Anspruch 1 oder 2, wobei das Verfahren umfasst
Anzeigen einer Benutzerschnittstelle der Endgerätevorrichtung basierend auf den über die Drahtlosverbindung zwischen der Endgerätevorrichtung und der Automatisierungsvorrichtung übertragenen Daten auf der Anzeige der Automatisierungsvorrichtung.

4. Verfahren nach Anspruch 1, 2 oder 3, wobei die Anzeige der Automatisierungsvorrichtung einen Touchscreen umfasst, und das Verfahren umfasst
Übermitteln von Steuerdaten, um die Automatisierungsvorrichtung oder die Endgerätevorrichtung in Antwort auf eine Benutzerberührung eines entsprechenden Elements auf der Benutzerschnittstelle zu steuern.

5. Verfahren nach einem der Ansprüche 1 bis 4, wobei das Verfahren umfasst
Umschalten der Benutzerschnittstelle der Automatisierungsvorrichtung aus einem Standby-Modus in einen aktiven Modus, wenn bestimmt wird, dass die Endgerätevorrichtung, die an der induktiven Ladestelle platziert ist, eine autorisierte Endgerätevorrichtung ist.

6. Verfahren nach einem der Ansprüche 1 bis 5, wobei der Identifizierungsvorgang das Empfangen, durch die Automatisierungsvorrichtung, von Identifizierungsinformationen bezüglich der Endgerätevorrichtung von der Endgerätevorrichtung umfasst.

7. Kommunikationssystem, umfassend eine Endgerätevorrichtung eines Drahtloskommunikationssystems und eine Automatisierungsvorrichtung, die dazu ausgebildet ist, elektrischen Strom aus einer elektrischen Leistungsversorgung zu empfangen, die Frequenz des empfangenen elektrischen Stroms auf eine andere Frequenz umzurichten, und danach den elektrischen Strom an einen Elektromotor zu liefern,
wobei die Automatisierungsvorrichtung eine induktive Ladestelle für die Endgerätevorrichtung umfasst, wobei die Automatisierungsvorrichtung Energieübertragungsmittel umfasst, die zur drahtlosen induktiven Leistungsübertragung an die an der Ladestelle platzierte Endgerätevorrichtung fähig sind, und wobei die Endgerätevorrichtung dazu fähig ist, drahtlose induktive Leistungsübertragung aus den Energieübertragungsmitteln der Automatisierungsvorrichtung zu empfangen, wenn die Endgerätevorrichtung an einer induktiven Ladestelle der Automatisierungsvorrichtung platziert ist,
wobei das System dazu ausgebildet ist
in Antwort auf Erkennen, in der Automatisierungsvorrichtung, dass die Endgerätevorrichtung an der Ladestelle platziert ist, einen Identifizierungsvorgang zwischen der Automatisierungsvorrichtung und der Endgerätevorrichtung über eine Drahtlosverbindung, die zwischen der Automatisierungsvorrichtung und der Endgerätevorrichtung aufgebaut ist, durchzuführen, um in der Automatisierungsvorrichtung zu bestimmen, ob die Endgerätevorrichtung eine autorisierte Endgerätevorrichtung ist;
wobei, wenn basierend auf dem Identifizierungsvorgang in der Automatisierungsvorrichtung bestimmt wird, dass die Endgerätevorrichtung eine autorisierte Endgerätevorrichtung ist, das System dazu ausgebildet ist, auf einer Anzeige der Automatisierungsvorrichtung eine Benutzerschnittstelle der Automatisierungsvorrichtung derart anzuzeigen, dass die Automatisierungsvorrichtung durch einen Benutzer mittels interaktiven Elementen, die auf der Benutzerschnittstelle angezeigt werden, steuerbar ist.

8. System nach Anspruch 7, wobei das System dazu ausgebildet ist, über eine Drahtlosverbindung, die zwischen der Automatisierungsvorrichtung und der Endgerätevorrichtung aufgebaut wird, wenn die Endgerätevorrichtung an der Ladestelle platziert wird, Identifizierungsinformationen bezüglich der Endgerätevorrichtung von der Endgerätevorrichtung an die Automatisierungsvorrichtung zu übermittelt, um der Automatisierungsvorrichtung anzugeben, dass die Endgerätevorrichtung eine autorisierte Endgerätevorrichtung ist.

9. System nach Anspruch 7 oder 8, wobei das System dazu ausgebildet ist, Datenübertragung zwischen der Automatisierungsvorrichtung und der Endgerätevorrichtung über die Drahtlosverbindung durchzuführen, wenn die Endgerätevorrichtung eine autorisierte Endgerätevorrichtung ist.

10. System nach Anspruch 9, wobei das System in der Endgerätevorrichtung dazu ausgebildet ist, den Benutzer dazu aufzufordern, während eines Benutzerregistrierungsvorgangs, der vor dem Identifizierungsvorgang in der Endgerätevorrichtung vollführt wird, ein Kennwort an der Endgerätevorrichtung einzugeben.

11. Verfahren nach einem der Ansprüche 1 bis 6, wobei die Drahtlosverbindung mindestens eine aus einer mobilen Netzwerkverbindung, drahtlosen lokalen Netzwerkverbindung, Bluetooth-Verbindung, WiFi-Verbindung, induktiven Verbindung, und Nahfeldkommunikationsverbindung umfasst.

12. Verfahren nach einem der Ansprüche 1 bis 6, wobei die Autorisierung der Endgerätevorrichtung so definiert ist, dass sie mindestens eines aus endgerätevorrichtungsspezifisch, automatisierungsvorrichtungsspezifisch, automatisierungsvorrichtungsgruppenspezifisch, benutzerspezifisch, benutzergruppenspezifisch, und aktionsspezifisch ist.

13. Automatisierungsvorrichtung, die dazu ausgebildet ist, elektrischen Strom aus einer elektrischen Leistungsversorgung zu empfangen, die Frequenz des empfangenen elektrischen Stroms auf eine andere Frequenz umzurichten, und danach den elektrischen Strom an einen Elektromotor zu liefern, wobei die Automatisierungsvorrichtung umfasst
mindestens einen Prozessor,
mindestens einen Speicher, der einen Computerprogrammcode einschließt, und
eine induktive Ladestelle für eine Endgerätevorrichtung eines Drahtloskommunikationssystems, wobei die Automatisierungsvorrichtung Energieübertragungsmittel umfasst, die zur drahtlosen induktiven Leistungsübertragung an die an der Ladestelle platzierte Endgerätevorrichtung fähig sind;
wobei der mindestens eine Speicher und der Computerprogrammcode dazu ausgebildet sind, in Antwort auf Erkennen, in der Automatisierungsvorrichtung, dass die Endgerätevorrichtung an der Ladestelle platziert ist, mit dem mindestens einen Prozessor die Automatisierungsvorrichtung dazu zu veranlassen
einen Identifizierungsvorgang zwischen der Automatisierungsvorrichtung und der Endgerätevorrichtung über eine Drahtlosverbindung, die zwischen der Automatisierungsvorrichtung und der Endgerätevorrichtung aufgebaut ist, durchzuführen, um zu bestimmen, ob die Endgerätevorrichtung eine autorisierte Endgerätevorrichtung ist;
wenn basierend auf dem Identifizierungsvorgang in der Automatisierungsvorrichtung bestimmt wird, dass die Endgerätevorrichtung eine autorisierte Endgerätevorrichtung ist, die Automatisierungsvorrichtung dazu ausgebildet ist
auf der Anzeige der Automatisierungsvorrichtung eine Benutzerschnittstelle der Automatisierungsvorrichtung derart anzuzeigen, dass die Automatisierungsvorrichtung durch einen Benutzer mittels interaktiven Elementen, die auf der Benutzerschnittstelle angezeigt werden, steuerbar ist.

14. Automatisierungsvorrichtung nach Anspruch 13, wobei der mindestens eine Speicher und der Computerprogrammcode dazu ausgebildet sind, mit dem mindestens einen Prozessor die Automatisierungsvorrichtung dazu zu veranlassen
einen der Verfahrensschritte der Ansprüche 1 bis 6, 11 oder 12 zu vollführen.

15. Automatisierungsvorrichtung nach Anspruch 13 oder 14, wobei die Automatisierungsvorrichtung in einem abgedichteten Gehäuse untergebracht ist.

16. Automatisierungsvorrichtung nach Anspruch 15, wobei sich die induktive Ladestelle am Gehäuse befindet.

17. Antriebssystem, das eine Automatisierungsvorrichtung nach einem der Ansprüche 13 bis 16 umfasst.

18. Computerprogrammprodukt, das auf einem von einem Computer lesbaren Verteilungsmedium ausgeführt ist und Programmanweisungen umfasst, die, wenn sie in ein Gerät geladen werden, alle die Schritte des Verfahrens nach einem der vorstehenden Ansprüche 1 bis 6, 11 oder 12 ausführen.

19. Computerprogrammprodukt, das auf einem von einem Computer lesbaren nichttransitorischen Verteilungsmedium ausgeführt ist und Programmanweisungen umfasst, die, wenn sie in den Computer geladen werden, einen Computerprozess ausführen, der alle die Schritte nach einem der Ansprüche 1 bis 6, 11 oder 12 ausführt.

## Revendications

1. Procédé pour établir une connexion entre un dispositif terminal d'un système de communications sans fil et un dispositif d'automatisation configuré pour recevoir un courant électrique provenant d'une alimentation en énergie électrique, convertir la fréquence du courant électrique reçu en une autre fréquence, et ensuite fournir le courant électrique à un moteur électrique ;
le dispositif d'automatisation comprenant une position de charge par induction pour le dispositif terminal, dans lequel le dispositif d'automatisation comprend des moyens de transfert d'énergie pouvant transférer sans fil l'énergie par induction au dispositif terminal placé en position de charge,
le procédé comprenant,
en réponse à la reconnaissance, dans le dispositif d'automatisation, que le dispositif terminal est placé en position de charge,
effectuer une procédure d'identification entre le dispositif d'automatisation et le dispositif terminal via une connexion sans fil établie entre le dispositif d'automatisation et le dispositif terminal pour déterminer, dans le dispositif d'automatisation, si le dispositif terminal est un dispositif terminal autorisé ;
si, sur la base de la procédure d'identification, il est déterminé dans le dispositif d'automatisation que le dispositif terminal est un dispositif terminal autorisé, le procédé comprend
l'affichage, sur un afficheur du dispositif d'automatisation, d'une interface utilisateur du dispositif d'automatisation, de sorte que le dispositif d'automatisation peut être commandé par un utilisateur au moyen d'éléments interactifs affichés sur l'interface utilisateur.

2. Procédé selon la revendication 1, dans lequel le procédé comprend en outre
l'exécution d'un transfert de données entre le dispositif d'automatisation et le dispositif terminal via la connexion sans fil ;
l'affichage, sur l'affichage du dispositif d'automatisation, d'au moins une partie des données transférées entre le dispositif d'automatisation et le dispositif terminal sans fil via la connexion sans fil.

3. Procédé selon la revendication 1 ou 2, dans lequel le procédé comprend
l'affichage, sur l'affichage du dispositif d'automatisation, d'une interface utilisateur du dispositif terminal, sur la base des données transférées entre le dispositif terminal et le dispositif d'automatisation via la connexion sans fil.

4. Procédé selon la revendication 1, 2 ou 3, dans lequel l'affichage du dispositif d'automatisation comprend un écran tactile ; et le procédé comprend
la transmission de données de commande pour commander le dispositif d'automatisation ou le dispositif terminal en réponse à un utilisateur touchant un élément correspondant sur l'interface utilisateur.

5. Procédé selon l'une quelconque des revendications 1 à 4, dans lequel le procédé comprend
la commutation de l'interface utilisateur du dispositif d'automatisation d'un mode veille à un mode actif s'il est déterminé que le dispositif terminal placé dans la position de charge par induction est un dispositif terminal autorisé.

6. Procédé selon l'une quelconque des revendications 1 à 5, dans lequel la procédure d'identification comprend la réception par le dispositif d'automatisation d'informations d'identification sur le dispositif terminal à partir du dispositif terminal.

7. Système de communication comprenant un dispositif terminal d'un système de communications sans fil et un dispositif d'automatisation configuré pour recevoir un courant électrique provenant d'une alimentation en énergie électrique, convertir la fréquence du courant électrique reçu en une autre fréquence, et ensuite fournir le courant électrique à un moteur électrique ;
dans lequel le dispositif d'automatisation comprend une position de charge par induction pour le dispositif terminal, dans lequel le dispositif d'automatisation comprend des moyens de transfert d'énergie pouvant transférer sans fil l'énergie par induction vers le dispositif terminal placé en position de charge, et dans lequel le dispositif terminal est capable de recevoir un transfert d'énergie par induction sans fil à partir des moyens de transfert d'énergie du dispositif d'automatisation lorsque le dispositif terminal est placé en position de charge par induction du dispositif d'automatisation ;
dans lequel le système est configuré
en réponse à la reconnaissance, dans le dispositif d'automatisation, que le dispositif terminal est placé en position de charge, pour effectuer une procédure d'identification entre le dispositif d'automatisation et le dispositif terminal via une connexion sans fil établie entre le dispositif d'automatisation et le dispositif terminal, pour déterminer, dans le dispositif d'automatisation, si le dispositif terminal est un dispositif terminal autorisé ;
dans lequel sur la base de la procédure d'identification s'il est déterminé, dans le dispositif d'automatisation, que le dispositif terminal est un dispositif terminal autorisé, le système est configuré pour afficher, sur un affichage du dispositif d'automatisation, une interface utilisateur du dispositif d'automatisation, de sorte que le dispositif d'automatisation peut être commandé par un utilisateur au moyen d'éléments interactifs affichés sur l'interface utilisateur.

8. Système selon la revendication 7, dans lequel le système est configuré pour transmettre, du dispositif terminal au dispositif d'automatisation, des informations d'identification sur le dispositif terminal via une connexion sans fil établie entre le dispositif d'automatisation et le dispositif terminal lorsque le dispositif terminal est placé en position de charge, afin d'indiquer au dispositif d'automatisation que le terminal est un terminal autorisé.

9. Système selon la revendication 7 ou 8, dans lequel le système est configuré pour effectuer un transfert de données entre le dispositif d'automatisation et le dispositif terminal via la connexion sans fil, si le dispositif terminal est un dispositif terminal autorisé.

10. Système selon la revendication 9, dans lequel le système est configuré pour inviter, dans le dispositif terminal, l'utilisateur à entrer un mot de passe sur le dispositif terminal pendant une procédure d'enregistrement d'utilisateur effectuée dans le dispositif terminal avant la procédure d'identification.

11. Procédé selon l'une quelconque des revendications 1 à 6, dans lequel la connexion sans fil comprend au moins une connexion parmi une connexion à un réseau mobile, une connexion à un réseau local sans fil, une connexion Bluetooth, une connexion WiFi, une connexion par induction et une connexion de communication en champ proche.

12. Procédé selon l'une quelconque des revendications 1 à 6, dans lequel l'autorisation du dispositif terminal est définie comme étant au moins une spécificités parmi une spécificité du dispositif terminal, une spécificité du dispositif d'automatisation, une spécificité du groupe du dispositif d'automatisation, une spécificité de l'utilisateur, une spécificité de groupe d'utilisateurs et une spécificité d'action.

13. Dispositif d'automatisation configuré pour recevoir un courant électrique provenant d'une alimentation électrique, convertir la fréquence du courant électrique reçu en une autre fréquence, et ensuite fournir le courant électrique à un moteur électrique, dans lequel le dispositif d'automatisation comprend :
au moins un processeur,
au moins une mémoire comprenant un code de programme informatique ; et
une position de charge par induction pour un dispositif terminal d'un système de communications sans fil, dans lequel le dispositif d'automatisation comprend des moyens de transfert d'énergie pouvant transférer sans fil de l'énergie par induction au dispositif terminal placé en position de charge ;
dans lequel, en réponse à la reconnaissance, dans le dispositif d'automatisation, que le dispositif terminal est placé dans la position de charge, l'au moins une mémoire et le code de programme informatique sont configurés, avec l'au moins un processeur, pour amener le dispositif d'automatisation à réaliser une procédure d'identification entre le dispositif d'automatisation et le dispositif terminal via une connexion sans fil établie entre le dispositif d'automatisation et le dispositif terminal, afin de déterminer si le dispositif terminal est un dispositif terminal autorisé ;
si, sur la base de la procédure d'identification, il est déterminé dans le dispositif d'automatisation que le dispositif terminal est un dispositif terminal autorisé, le dispositif d'automatisation est configuré pour afficher sur l'affichage du dispositif d'automatisation une interface utilisateur du dispositif d'automatisation, de sorte que le dispositif d'automatisation peut être commandé par un utilisateur au moyen d'éléments interactifs affichés sur l'interface utilisateur.

14. Dispositif d'automatisation selon la revendication 13, dans lequel l'au moins une mémoire et le code de programme d'ordinateur sont configurés avec l'au moins un processeur pour amener le dispositif d'automatisation à exécuter l'une quelconque des étapes de procédé des revendications 1 à 6, 11 ou 12.

15. Dispositif d'automatisation selon la revendication 13 ou 14, dans lequel le dispositif d'automatisation est enfermé dans une enceinte étanche.

16. Dispositif d'automatisation selon la revendication 15, dans lequel la position de charge par induction est située sur l'enceinte.

17. Système d'entraînement comprenant un dispositif d'automatisation selon l'une quelconque des revendications 13 à 16.

18. Produit programme d'ordinateur incorporé sur un support de diffusion lisible par un ordinateur et comprenant des instructions de programme qui, chargées dans un appareil, exécutent toutes les étapes du procédé selon l'une quelconque des revendications précédentes 1 à 6, 11 ou 12.

19. Produit programme d'ordinateur incorporé sur un support de diffusion non transitoire lisible par un ordinateur et comprenant des instructions de programme qui, lorsqu'elles sont chargées dans l'ordinateur, exécutent un processus informatique comprenant toutes les étapes de l'une quelconque des revendications 1 à 6, 11 ou 12.
